# EUROPÄISCHE PATENTANMELDUNG

(11) **EP 3 996 191 A1**
(43) Veröffentlichungstag der Anmeldung: **11.05.2022**
(21) Anmeldenummer: 20206219.6
(22) Anmeldetag: 06.11.2020
(51) Int. Cl.: H01M 50/249, H01M 50/308, H01M 50/342, H01M 50/35, H01M 50/30, F16K 17/16

(54) **VENTIL ZUM DRUCKAUSGLEICH UND/ ODER DRUCKÜBERLASTABBAU**

(71) Anmelder: tmax Holding GmbH, 68169 Mannheim (DE)
(72) Erfinder: Baum, Armin, 64668 Rimbach (DE)
(74) Vertreter: Wesch, Arno

(57) **Zusammenfassung**

Ein Ventil zum Druckausgleich und/oder Drucküberlastabbau, umfassend einen Grundkörper (1), in welchem mindestens ein Durchgang (2) zum Druckausgleich und/ oder Drucküberlastabbau ausgebildet ist, wobei sich der Durchgang (2) von einem Einlass (3) zu einem Auslass (4) erstreckt, ist im Hinblick auf die Aufgabe, ein Ventil zum Druckausgleich und/ oder Drucküberlastabbau anzugeben, welches bei möglichst geringer und dennoch variabler Bauhöhe aus einfach zu fertigenden Komponenten besteht, mittels derer das Ventil individuell an verschiedene Anforderungen anpassbar ist, dadurch gekennzeichnet, dass der Grundkörper (1) übereinander angeordnete Scheiben und/ oder Ringe aufweist, die zu einem Verbund zusammengefasst sind und zumindest abschnittsweise die Außenwandung (5) des Grundkörpers (1) ausbilden.

## Beschreibung

Die Erfindung betrifft ein Ventil zum Druckausgleich und/ oder Drucküberlastabbau nach dem Oberbegriff des Patentanspruchs 1.

In Fahrzeugen werden zunehmend Batterien eingesetzt, um die Fahrzeuge elektrisch zu betreiben. Die Batterien werden in möglichst wärmeresistenten oder feuerresistenten Batteriegehäusen aufgenommen, um diese beispielsweise im Fall eines von außen auf das Batteriegehäuse einwirkenden Feuers oder von außen einwirkender Wärme vor einer Entzündung zu schützen bzw. eine Brandausbreitung von innen nach außen zu verhindern. Aufgrund chemischer, elektrischer und/ oder mechanischer Vorgänge können aber auch hohe Drücke im Inneren eines Batteriegehäuses entstehen. Im Brandfall jedoch kann das Innere eines solchen Batteriegehäuses geschädigt werden, wenn Flammen aus der Atmosphäre kommend in das Innere des Batteriegehäuses gelangen. Des Weiteren kann ein Brand, der innerhalb des Batteriegehäuses entsteht, die Umgebung schädigen, wenn nämlich Flammen aus dem Inneren des Batteriegehäuses in die Atmosphäre gelangen.

Vor diesem Hintergrund ist bereits ein Ventil zum Druckausgleich und/ oder Drucküberlastabbau aus der EP 3 493 293 B1 bekannt geworden.

Dieses Ventil weist Spiralfedern, mehrere Teilventile, intumeszierendes Material und eine relativ große Bauhöhe auf.

Der Erfindung liegt vor diesem Hintergrund die Aufgabe zugrunde, ein Ventil zum Druckausgleich und/ oder Drucküberlastabbau anzugeben, welches bei möglichst geringer und dennoch variabler Bauhöhe aus einfach zu fertigenden Komponenten besteht, mittels derer das Ventil individuell an verschiedene Anforderungen anpassbar ist.

Die vorliegende Erfindung löst die genannte Aufgabe durch die Merkmale des Patentanspruchs 1.

Erfindungsgemäß ist zunächst erkannt worden, dass der gesamte Grundkörper und damit das ganze Ventil aus übereinander angeordneten Scheiben und/ oder Ringen gebildet werden kann, die dann auch den Boden, den Deckel und die Außenwandung bzw. den Mantel des Grundkörpers bilden können. So kann die Bauhöhe des Ventils ganz problemlos durch Einfügen oder Zwischenlegen weiterer Scheiben oder Ringe an geeigneter Stelle eingestellt werden. Weiter ist erkannt worden, dass ein solches Ventil gefertigt werden kann, ohne viele Teile zuzukaufen. Das Ventil kann feuerfest ausgestaltet werden und kann eine Dichtheit mindestens gemäß IP67 gewährleisten. Durch die Anordnung von Ringen und/ oder Scheiben weist das Ventil keine dreidimensional ausladenden, mechanischen Elemente wie Spiralfedern auf. Die Funktionen von Federn können sehr flache Strukturen übernehmen. Die mechanische Bearbeitung des Ventils ist ebenfalls sehr einfach, und zum Zusammenfügen des Ventils werden keine oder nahezu keine Werkzeuge benötigt, weil die gestapelten Ringe oder Scheiben ganz leicht verbunden werden können. Bei einem Brand, egal ob von innen oder von außen kommend, können metallische Scheiben oder Ringe dem Brand lange Stand halten und eine metallische Dichtung ausbilden.

Die Scheiben und/ oder Ringe könnten durch Laserschneiden oder einen Stanzprozess gefertigt sein und daher als zweidimensionale, sich in lateraler Richtung erstreckende Lagen ausgestaltet sein, deren Lagenhöhe geringer ist als ihre laterale Erstreckung. Hierdurch ist keine spanende Bearbeitung notwendig.

Ein Konstruktionsprinzip, welches auf Laserschneiden beruht, führt zu einem Grundkörper des Ventils, der im Wesentlichen durch 2D-Laserscheiben gebildet ist. Die Laserscheiben können bereichsweise miteinander punktgeschweißt werden, könnten aber weitestgehend auch nur zusammengesteckt und beispielsweise mit zwei Schrauben verbunden sein. Da auch ein Gewindeformen maschinell auf einer Laser/Stanznippel-Maschine erfolgen kann, ist keine 3D Bearbeitung oder spanende Bearbeitung wie Fräsen oder Drehen notwendig.

Vor diesem Hintergrund sei aber ausgeführt, dass die hier beschriebenen Scheiben und Ringe auch als Kunststoffspritzgussteile ausgestaltet sein können. So kann Gewicht eingespart werden. Einzelne Scheiben, Ringe oder Verbünde aus diesen könnten auch durch Fräsen oder Drehen hergestellt werden, sofern dies technisch sinnvoll ist.

Die Scheiben und/ oder Ringe könnten durch Punktschweißen und/ oder Verschrauben miteinander verbunden sein, so dass eine Scheibe oder ein Ring den Boden des Grundkörpers bildet und eine Scheibe oder ein Ring den Deckel des Grundkörpers ausbildet, wobei alle weiteren Komponenten des Ventils im an ein Gehäuse montierten Zustand zwischen dem Boden und dem Deckel angeordnet sind. So können alle weiteren Komponenten wie Sicherungsringe oder Dichtungen, insbesondere O-Ringe oder Dichtungen aus Elastomeren, aber auch Berstscheiben oder ähnliche Platten innerhalb des Grundkörpers gekammert und/ oder aufgenommen werden.

Ein Teil der Scheiben und/ oder Ringe könnte zu einem Unterverbund des Verbunds vormontiert zusammengefasst sein. Hierdurch wird die Montage vereinfacht. Es müssen weniger einzelne Scheiben oder Ringe händisch zusammengefügt werden.

Eine Scheibe könnte als geschlossener Deckel ohne mittigen Durchgang ausgestaltet sein. Hierdurch ist ein Zugriff von oben in den Grundkörper, aber auch in ein Gehäuse, an dem der Grundkörper anliegt, verhindert. Das Innere des Ventils und auch des Gehäuses ist vor Spritzwasser aber auch vor Flammen geschützt.

Eine Scheibe oder ein Ring könnte den Boden des Grundkörpers ausbilden, wobei im Boden der Einlass und/ oder mindestens ein Wasserablaufschlitz ausgebildet ist bzw. sind. So kann der Boden direkt an ein Gehäuse angelegt werden, wobei eine Gehäuseöffnung in den Einlass und damit in den Durchgang mündet. Durch einen Wasserablaufschlitz kann in den Grundkörper eingedrungenes Wasser ablaufen. Bevorzugt umgeben mehrere Wasserablaufschlitze den Einlass periphär.

Das Ventil könnte feuerfest ausgestaltet sein. Alternativ oder zusätzlich könnte zumindest ein Teil der verbauten Scheiben und/ oder Ringe oder könnten alle verbauten Scheiben und/ oder Ringe aus Metall gefertigt sein. Metalle sind feuerfest und halten Bränden lange stand. Weiter alternativ oder zusätzlich könnten zumindest zwei oder mehrere Scheiben und/ oder Ringe metallisch dichtend aneinander liegen. So kann, bei reduzierten Anforderungen an den IP-Code, auf die Verwendung brennbarer Dichtungen verzichtet werden.

Der Auslass des Durchgangs könnte zwischen zwei Scheiben und/ oder Ringen angeordnet sein, so dass ein Fluid in lateraler Richtung oder radialer Richtung entweichen kann, quasi parallel zu einer Gehäusewandung, an der das Ventil montiert ist. Hierdurch können zwei aneinander liegende Scheiben oder Ringe eine Labyrinthdichtung ausbilden. Bevorzugt sind hierzu die umlaufenden Ränder der aneinanderliegenden Scheiben oder Ringe zumindest abschnittsweise radial und/ oder axial versetzt zueinander angeordnet.

Die Ränder bilden bevorzugt Schlitzöffnungen aus, die den Auslass bilden. Die Schlitzöffnungen sind bevorzugt kreissegmentartig, also nicht am Umfang voll umlaufend ausgebildet.

Der Auslass des Durchgangs könnte durch mehr als zwei Scheiben und/ oder Ringe gebildet sein. Hierdurch kann einerseits die Bauhöhe des Ventil erhöht und andererseits die Querschnittsfläche des Auslasses effektiv erhöht werden, weil mehrere Schlitzöffnungen geschaffen werden. So können zwischen mehr als zwei aneinander liegenden Scheiben oder Ringe Labyrinthdichtungen durch versetzte Ränder erzeugt werden.

Durch das Labyrinthsystem, insbesondere eines überwiegend oder vollständig metallischen Grundkörpers, der eine metallische Dichtwirkung entfaltet, kann das Austreten von Flammen von innen bzw. das Übergreifen von Flammen von außen ins Innere des Gehäuses stark vermindert werden.

Zwischen dem Einlass und dem Auslass könnte eine lösbare Platte aus einem fluidundurchlässigen Material angeordnet sein. Die Platte könnte aus einem Metall oder einem hitzebeständigen Kunststoff gefertigt sein. So ist eine hohe Feuerfestigkeit bei einem von innen und von außen kommenden Brand gewährleistet. Die Platte wird gelöst, wenn eine Drucküberlast im Inneren eines Gehäuses abgebaut werden soll, insbesondere im Havariefall. Bei einem Druckanstieg, insbesondere durch einen Brand, im Inneren des Gehäuses wird das Ventil auslösen, wobei die Platte von ihrer Position im Normalbetrieb entfernt wird und dann Fluid durch den Auslass rasch abströmen kann. Durch das Entfernen der Platte wird ein Volumenstrom des Fluids vergrößert.

Zur Verwendung des Ventils im Normalfall bzw. im Normalbetrieb könnte die Platte eine Aussparung aufweisen, die durch eine fluiddurchlässige Membran verschlossen ist. Durch die Membran, welche bevorzugt als Polytetrafluorethylen-Membran ausgebildet ist, kann dauerhaft ein Druckausgleich zwischen dem Inneren eines Gehäuses und der Atmosphäre gewährleistet werden. Die Größe der Membran regelt den Luftdurchsatz im Normalfall und hat keinen wesentlichen Einfluss auf das Auslöseverhalten des Ventils. Mittels einer geeignet ausgewählten Membran und einer zu dieser passenden Bohrung in der Platte kann der Luftdurchsatz eingestellt werden.

Die lösbare Platte könnte durch umbiegbare oder entfernbare Stege mittelbar oder unmittelbar gegen eine Scheibe oder einen Ring oder eine Gehäusewandung gedrückt sein. Durch geeignete Wahl der Dicke der Stege kann eingestellt werden, ab welchem Druck im Inneren des Gehäuses die Platte gelöst werden soll. Während des Umbiegens der Stege wird die Platte relativ schonend und nicht ganz so ruckartig aus ihrer dichtenden Lage entfernt und kann dann, ohne frei durch einen Raum zu fliegen und Menschen zu verletzen, im Inneren des Grundkörpers aufgefangen werden, wenn sie am Deckel anschlägt.

Die lösbare Platte könnte durch die umbiegbaren oder entfernbaren Stege gegen eine Dichtung gedrückt sein, die an ein Gehäuse anlegbar ist. Bevorzugt ist die Dichtung als O-Ring, insbesondere aus einem Elastomer, ausgebildet. Hierdurch kann das Ventil im Normalbetrieb eine hohe Dichtheit, insbesondere gegen Spritzwasser, gewährleisten. Durch die lösbare Platte wird ein Wirkprinzip nach Art einer Berstscheibe realisiert. Die berstscheibenartige Platte liefert einen Gegendruck für die Dichtung, die bevorzugt als O-Ring ausgestaltet ist.

Wenn der Grundkörper aufgrund der verwendeten Scheiben und/ oder Ringe metallisch ausgestaltet ist, entsteht eine metallische Dichtwirkung durch Anlage der Scheiben und/ oder Ringe aneinander. Diese Dichtwirkung verhindert auch nach einem Versagen des O-Rings oder der PTFE-Membran weitgehend ein Übergreifen von Flammen, die von außen kommen, auf das Innere des Gehäuses oder schließt das Übergreifen sogar aus. Auch wenn Flammen von innen kommen, kann die Dichtwirkung helfen, ein Übergreifen der Flammen zu vermeiden.

Die Stege könnten an einer Scheibe oder einem Ring angeordnet sein, der einen Zentraldurchgang aufweist, wobei die Stege radial in den Zentraldurchgang einragen. Hierdurch kann auch diese Scheibe oder dieser Ring zum Aufbau der Außenwandung des Grundkörpers beitragen und zwischen anderen Scheiben und/ oder Ringen gestapelt werden.

Im Grundkörper könnte mindestens eine Durchgriffsöffnung für eine Schraube und/ oder einen Bolzen oder Schraubbolzen vorgesehen sein, die sich durch den ganzen Grundkörper erstreckt. So kann das Ventil auf einen Schraubbolzen, der an einem Gehäuse fest angeordnet ist, aufgesteckt und mit dem Gehäuse mittels einer Mutter verschraubt werden.

Eine Anordnung könnte ein Ventil der hier beschriebenen Art und ein Gehäuse umfassen, an welchem das Ventil angeordnet ist. Alternativ oder zusätzlich könnte die Anordnung ein Ventil der hier beschriebenen Art und einen Adapter umfassen, welcher mit dem Ventil verbunden ist, wobei der Adapter ein Leitungs- oder Rohrstück aufweist. So kann Abluft, welche durch das Ventil ausströmt, effektiv abgesaugt werden, indem nämlich ein Schlauch an den Adapter angeschlossen wird. Das hier beschriebene Ventil kann in allen Gehäusen, insbesondere feuerfesten Gehäusen, verwendet werden, bevorzugt jedoch in Batteriegehäusen, die eine Druckschwankung erfahren und im Havariefall einen vollständigen Druckabbau erfahren müssen. Das Ventil kann eine Dichtheit gemäß IP 67, IP 68 oder IP 6K 9K gewährleisten.

In der Zeichnung zeigen
- Fig. 1: eine Schnittansicht eines Ventils im geschlossenen Zustand, nämlich im Normalbetrieb, wenn der Druckausgleich über eine Membran erfolgt,
- Fig. 2: eine Schnittansicht des Ventils gemäß Fig. 1 im geöffneten Zustand, wenn eine Drucküberlast abgebaut wird,
- Fig. 3: eine perspektivische Draufsicht auf ein fertig zusammengesetztes Ventil, welches im gezeigten Zustand an ein Gehäuse anordenbar ist,
- Fig. 4: eine Explosionsansicht des Ventils gemäß Fig. 3,
- Fig. 5: eine weitere Explosionsansicht des Ventils gemäß Fig. 3, wobei einzelne Scheiben zu einem Unterverbund zusammengefasst sind,
- Fig. 6: eine Draufsicht auf eine von drei Stegen gehaltene lösbare Platte, die eine Membran trägt,
- Fig. 7: eine Schnittansicht eines Ventils mit mehreren Scheiben, die einen Auslass bilden, im Normalbetrieb und geschlossenen Zustand,
- Fig. 8: eine Schnittansicht des Ventils gemäß Fig. 7 im geöffneten Zustand,
- Fig. 9: eine perspektivische Ansicht eines Gehäuses, von welchem drei Schraubbolzen zur Aufnahme eines Ventils abragen,
- Fig. 10: eine perspektivische Ansicht des Gehäuses gemäß Fig. 9 mit aufgeschraubtem Ventil gemäß Fig. 3,
- Fig. 11: eine perspektivische Ansicht eines Adapters zur Luftabsaugung, der mit dem Ventil gemäß Fig. 3 verbunden ist, und
- Fig. 12: eine perspektivische Ansicht des Gehäuses gemäß Fig. 9 mit aufgeschraubtem Ventil mit Adapter.

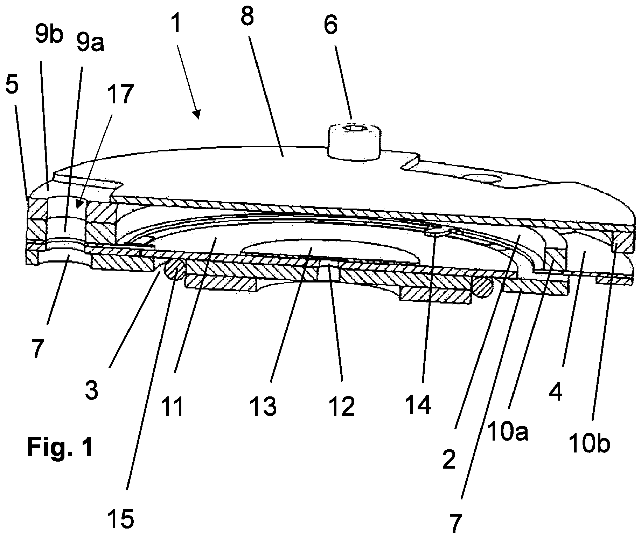

Fig. 1 zeigt ein Ventil zum Druckausgleich und Drucküberlastabbau, umfassend einen Grundkörper 1, in welchem mindestens ein Durchgang 2 zum Druckausgleich und Drucküberlastabbau ausgebildet ist, wobei sich der Durchgang 2 von einem Einlass 3 zu einem Auslass 4 erstreckt. Der Durchgang 2 dient im Normalbetrieb zum Druckausgleich und kann im Störfall zum Drucküberlastabbau verwendet werden.

Der Grundkörper 1 weist übereinander angeordnete Scheiben und Ringe auf, die zu einem Verbund zusammengefasst sind und zumindest abschnittsweise die Außenwandung 5 des Grundkörpers 1 ausbilden. Der Auslass 4 durchbricht die Außenwandung 5, dies ist in Fig. 1 rechts erkennbar.

Die Scheiben und Ringe sind durch Laserschneiden oder einen Stanzprozess gefertigt und sind daher als zweidimensionale, sich in lateraler Richtung erstreckende Lagen ausgestaltet sind, deren Lagenhöhe geringer ist als ihre laterale Erstreckung.

Die Scheiben oder Ringe sind durch Verschrauben mittels zwei Schrauben 6 miteinander verbunden, so dass ein Ring den Boden 7 des Grundkörpers 1 bildet und eine Scheibe den Deckel 8 des Grundkörpers 1 ausbildet, wobei alle weiteren Komponenten des Ventils zwischen dem Boden 7 und dem Deckel 8 angeordnet sind.

Eine Scheibe ist als geschlossener Deckel 8 ohne mittigen Durchgang ausgestaltet. Ein Ring bildet den Boden 7 des Grundkörpers 1 aus, wobei im Boden 7 der Einlass 3 in Form eines mittigen Lochs ausgebildet ist.

Der Auslass 4 des Durchgangs 2 ist zwischen zwei Ringen 9a, 9b angeordnet, so dass ein Fluid in lateraler Richtung oder radialer Richtung entweichen kann. Hierzu sind die jeweiligen umlaufenden Ränder 10a, 10b der Ringe 9a, 9b radial und axial versetzt zueinander angeordnet. Die Ränder 10a, 10b bilden eine Art Labyrinth aus. Das durch den Auslass 4 entweichende Fluid umströmt die Ränder 10a, 10b.

Zwischen dem Einlass 3 und dem Auslass 4 ist eine lösbare Platte 11 aus einem fluidundurchlässigen Material angeordnet. Die Platte 11 weist eine Aussparung 12 auf, die durch eine fluiddurchlässige Membran 13 verschlossen ist. Die Membran 13 dient dem Druckausgleich im Normalbetrieb.

Die lösbare Platte 11 ist durch umbiegbare Stege 14 unmittelbar gegen einen Ring, nämlich den Boden 7, gedrückt. Die lösbare Platte 11 ist durch drei umbiegbare Stege 14 gegen eine Dichtung 15, nämlich einen O-Ring, gedrückt, die an ein Gehäuse 21 anlegbar ist. Drei Stege 14 sind an einem Ring angeordnet, der einen Zentraldurchgang 16 aufweist, wobei die drei Stege 14 radial in den Zentraldurchgang 16 einragen und im Zentraldurchgang 16 mit einem freien Ende enden.

Im Grundkörper 1 ist mindestens eine Durchgriffsöffnung 17 für eine Schraube oder einen Bolzen oder Schraubbolzen vorgesehen, die sich durch den ganzen Grundkörper 1 erstreckt.

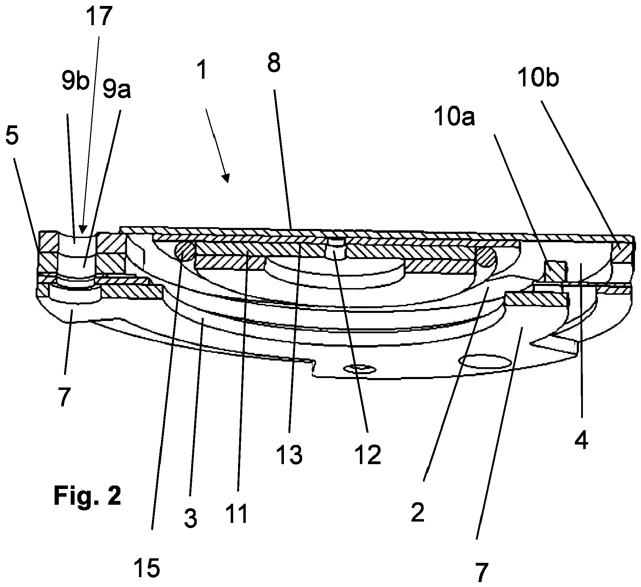

Fig. 2 zeigt das Ventil gemäß Fig. 1 im geöffneten Zustand, wenn nämlich die lösbare Platte 11 nebst Dichtung 15 und Membran 13 in Richtung des Deckels 8 gedrückt wurde. Hierdurch ist die fluiddurchlässige Gesamtquerschnittsfläche des Durchgangs 2 erhöht und Fluid kann in erhöhtem Maße vom Einlass 3 durch den Durchgang 2 in Richtung des Auslasses 4 strömen.

Hierdurch ist ein effektiver Drucküberlastabbau ermöglicht. Durch das Drücken der lösbaren Platte 11 in Richtung des Deckels 8, wurden die drei Stege 14 umgebogen. Der Deckel 8 hat die Platte 11 daran gehindert, in die Umgebung zu gelangen und eventuell Personen zu verletzen.

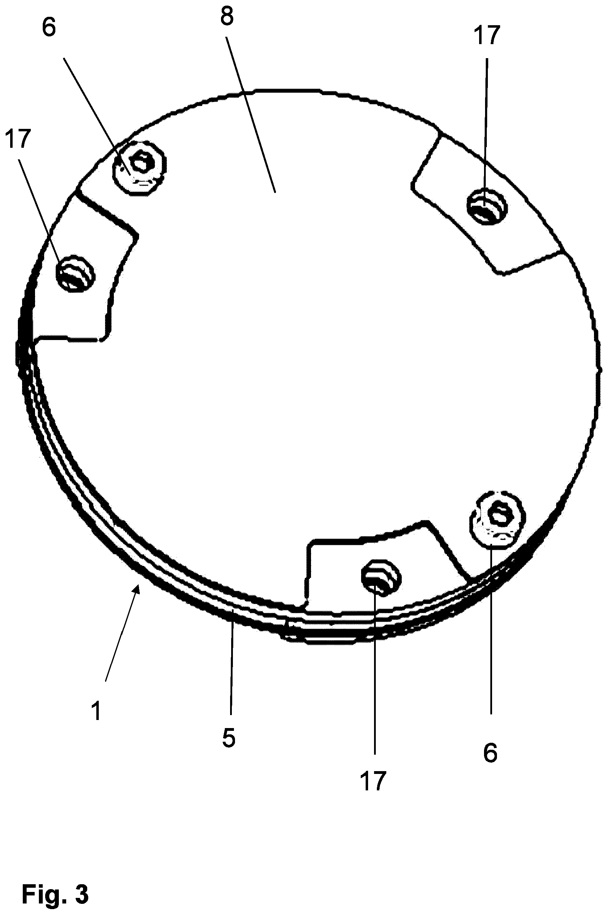

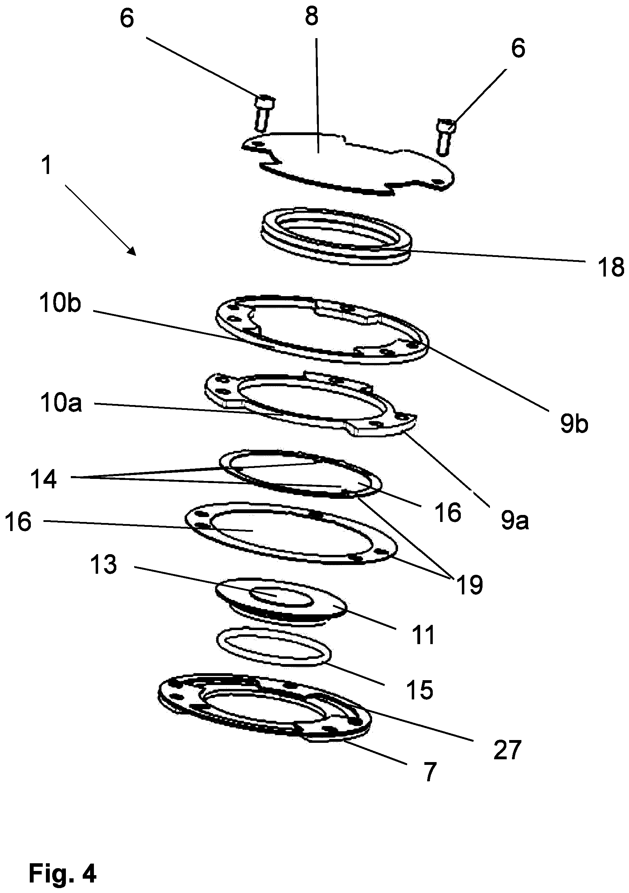

Fig. 3 zeigt eine perspektivische Ansicht des Ventils in zusammengefügtem Zustand. Fig. 4 zeigt eine Explosionsansicht des Ventils gemäß Fig. 1. Unterhalb des Deckels 8 ist ein Sicherungsring 18 angeordnet, der erst nach der Montage des Ventils entfernt wird.

In den Boden 7 sind Wasserablaufschlitze 27 eingebracht. So kann Wasser, welches in den Grundkörper 1 eindringt effektiv abgeleitet werden. Wasser kann aber auch über den Auslass 4 ablaufen.

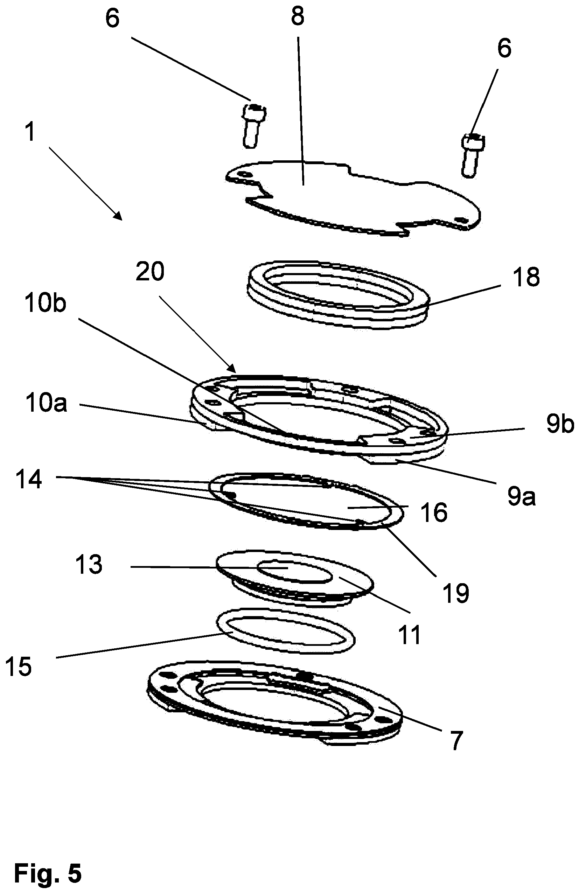

Fig. 5 zeigt eine weitere Explosionsansicht des Ventils gemäß Fig. 1, wobei dargestellt ist, dass ein Teil der Scheiben oder Ringe jeweils zu einem Unterverbund 19 oder 20 des Verbunds vormontiert zusammengefasst sind. Konkret sind zwei Ringe zu einem ersten Unterverbund 19 zusammengefasst, der den Ring mit den drei Stegen 14 umfasst, und sind die beiden Ringe 9a, 9b mit den labyrinthbildenden Rändern 10a, 10b zu einem zweiten Unterverbund 20 zusammengefasst.

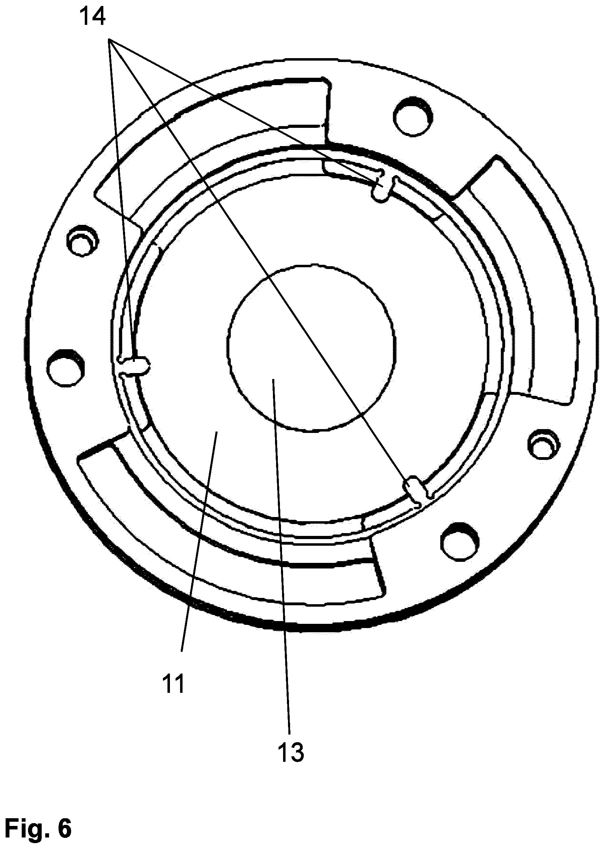

Fig. 6 zeigt eine Innenansicht des Ventils ohne Deckel 8, nämlich eine Draufsicht auf die lösbare Platte 11 nebst Membran 13, wobei die lösbare Platte 11 durch drei umbiegbare Stege 14 gehalten ist.

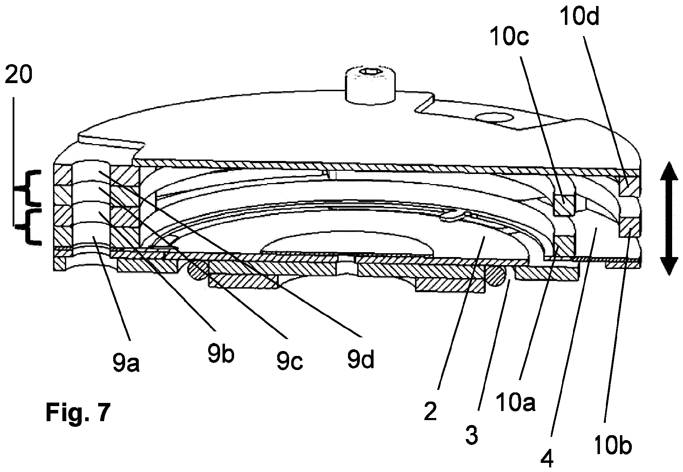

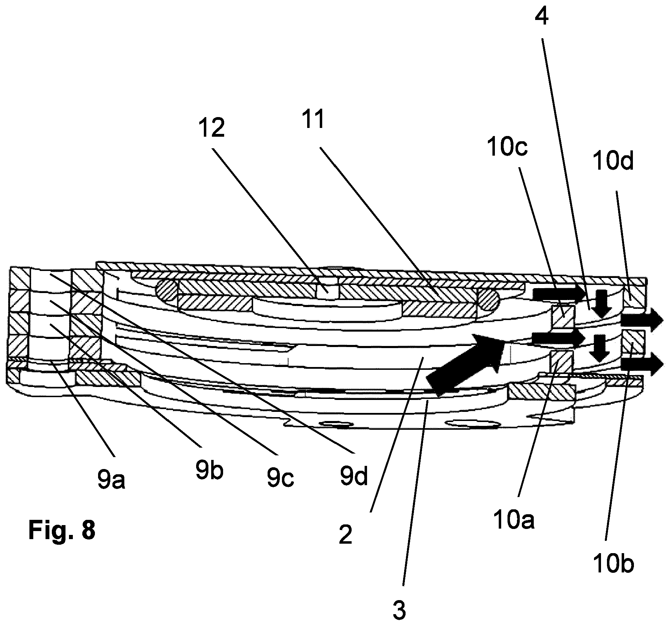

Fig. 7 und 8 zeigen, dass der Auslass 4 des Durchgangs 2 durch mehr als zwei Ringe gebildet ist, nämlich hier durch vier Ringe 9a, 9b, 9c, 9c, deren Ränder 10a, 10b, 10c, 10d paarweise radial und axial versetzt zueinander angeordnet sind.

Die Pfeile in Fig. 8 zeigen, wie ein Fluid durch den Durchgang 2 vom Einlass 3 kommend über den Auslass 4 zum Drucküberlastabbau in die Atmosphäre abströmt. Eine Verdopplung der Ringlagen bzw. des Unterverbunds 20 führt zu einer Verdopplung des Fluiddurchsatzes.

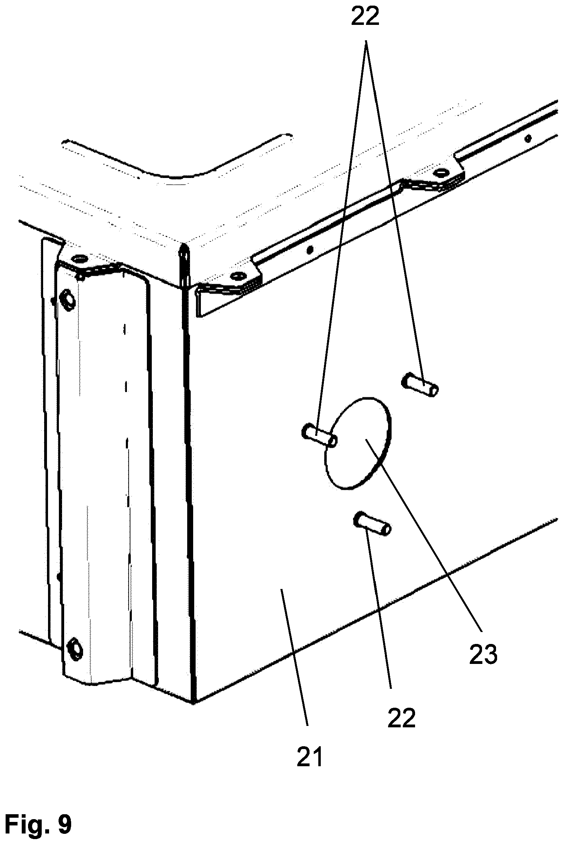

Fig. 9 zeigt abschnittsweise ein Gehäuse 21, an welchem ein Ventil gemäß Fig. 1 oder 7 anordenbar ist, wobei vom Gehäuse 21 drei Schraubbolzen 22 abragen, die in die Durchgriffsöffnungen 17 des Ventils eingreifen und diese durchgreifen können. Im Gehäuse 21 ist eine Gehäuseöffnung 23 ausgebildet, welche in den Einlass 3 und damit in den Durchgang 2 mündet.

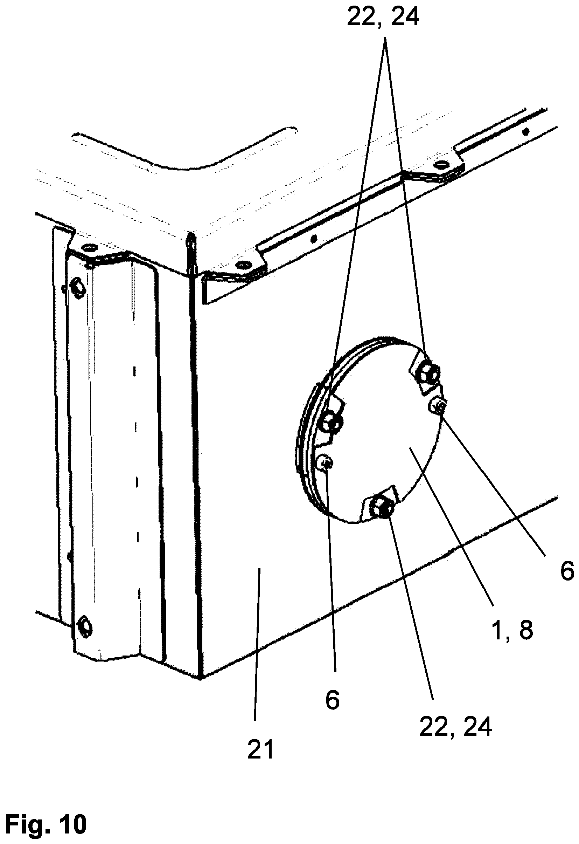

Fig. 10 zeigt das Gehäuse 21 gemäß Fig. 9, an welchem das Ventil angeordnet ist. Drei Schraubbolzen 22 durchgreifen die drei Eingriffsöffnungen 17 des Ventils und sind mit Muttern 24 versehen, welche das Ventil dicht gegen das Gehäuse 21 pressen. Die Dichtung 15 wird dabei zur Abdichtung gegen die Gehäusewandung gepresst. Das Gehäuse 21 ist als Batteriegehäuse ausgeführt und nimmt nicht gezeigte Batterien auf.

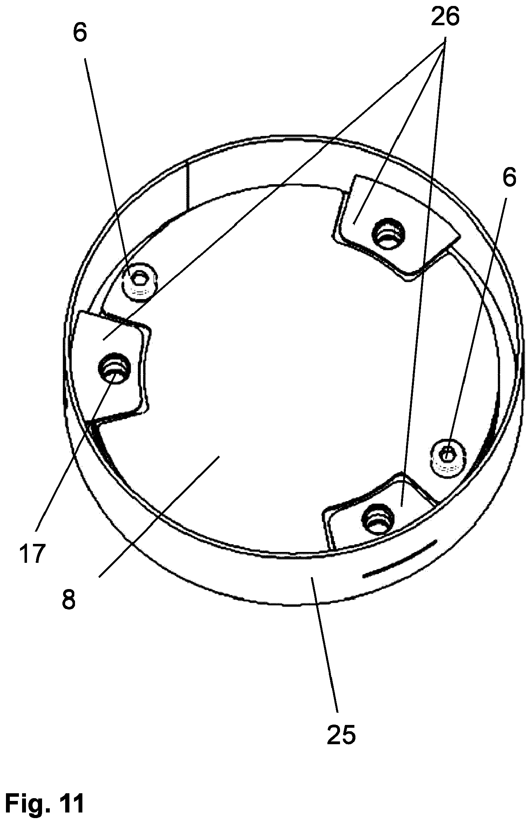

Fig. 11 zeigt einen Adapter 25, welcher mit dem Ventil verbunden ist, wobei der Adapter 25 ein Leitungs- oder Rohrstück aufweist. Innerhalb des Adapters 25 sind Laschen 26 angeordnet, welche Löcher für die Aufnahme der Schraubbolzen 22 gemäß Fig. 9 und 10 aufweisen. Die Löcher fluchten mit den Durchgriffsöffnungen 17 des Ventils.

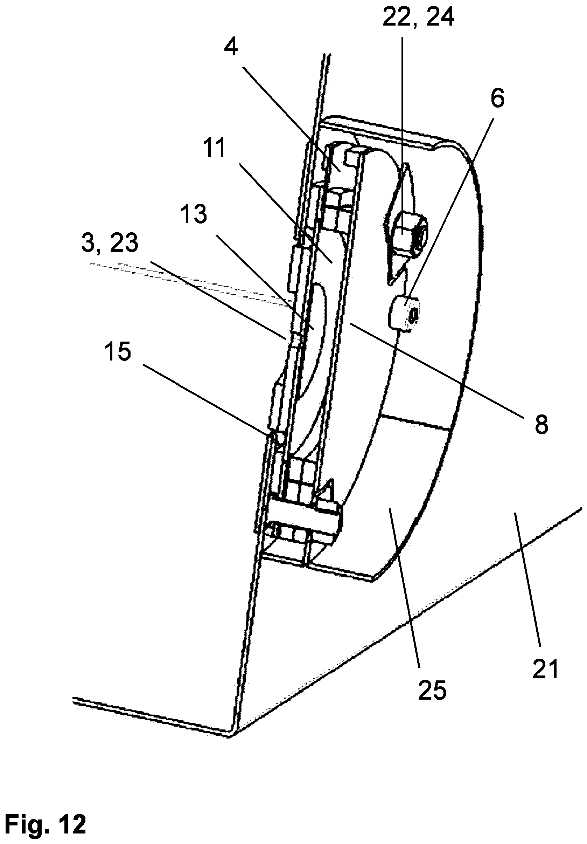

Fig. 12 zeigt eine Anordnung, umfassend das Ventil und das Gehäuse 21, an welchem das Ventil angeordnet ist und den Adapter 25, welcher mit dem Ventil und mit dem Gehäuse 21 verbunden ist, wobei der Adapter 25 ein Leitungs- oder Rohrstück aufweist. Ein Schlauch oder eine Abluftleitung kann an das zylindrische Leitungs- oder Rohrstück angeschlossen werden, um Fluid aus dem Inneren des Gehäuses 21 besonders effektiv abzuführen.

Durch den konstruktiven Aufbau des Ventils kann Strahlwasser von außen nicht direkt an Dichtungen 15, wie O-Ringen, oder an die Membran 13, nämlich die PTFE-Membran, gelangen. Vielmehr sind diese Komponenten gekammert im Grundkörper aufgenommen.

Durch die Anordnung der Dichtung 15 und der Membran 13 wird bei steigendem Druck von außen die Dichtheit nicht vermindert. Der Druckausgleich bzw. Luftdurchsatz kann je nach Art und Ausführung der aufgeklebten PTFE-Membran variiert werden.

Im Inneren des Grundkörpers 1 ist ein Sicherungsring 18 oder sind mehrere Sicherungsringe 18 platziert. Dieser schützt bzw. diese schützen die lösbare Platte 11 vor ungewollten Beschädigungen. Nach der Installation des Ventils am Gehäuse 21 und vor Inbetriebnahme ist der Sicherungsring 18 entfernt.

Das hier beschriebene Ventil ohne Adapter 25 weist eine minimale Bauhöhe von 12,5 mm ohne Verschraubung und 18 mm mit Verschraubung auf. Der Durchmesser beträgt 85 mm. Die Höhe und der Durchmesser sind je nach erforderlichem Fluiddurchsatz, insbesondere im Havariefall, variierbar.

### Bezugszeichenliste

- 1: Grundkörper
- 2: Durchgang
- 3: Einlass
- 4: Auslass
- 3: zweiter Abschnitt von 1
- 4: erstes Teilventil
- 5: Außenwandung
- 6: Schraube
- 7: Boden
- 8: Deckel
- 9a-d: Ring mit Rand
- 10a-d: Rand von 9a-d
- 11: lösbare Platte
- 12: Aussparung
- 13: Membran
- 14: Steg
- 15: Dichtung
- 16: Zentraldurchgang
- 17: Durchgriffsöffnung
- 18: Sicherungsring
- 19: Unterverbund
- 20: Unterverbund von 9a, 9b
- 21: Gehäuse
- 22: Schraubbolzen
- 23: Gehäuseöffnung
- 24: Mutter
- 25: Adapter
- 26: Lasche
- 27: Wasserablaufschlitz

## Patentansprüche

1. Ventil zum Druckausgleich und/ oder Drucküberlastabbau, umfassend einen Grundkörper (1), in welchem mindestens ein Durchgang (2) zum Druckausgleich und/ oder Drucküberlastabbau ausgebildet ist, wobei sich der Durchgang (2) von einem Einlass (3) zu einem Auslass (4) erstreckt, **dadurch gekennzeichnet, dass**
der Grundkörper (1) übereinander angeordnete Scheiben und/ oder Ringe aufweist, die zu einem Verbund zusammengefasst sind und zumindest abschnittsweise die Außenwandung (5) des Grundkörpers (1) ausbilden.

2. Ventil nach Anspruch 1, **dadurch gekennzeichnet, dass** die Scheiben und/ oder Ringe durch Laserschneiden oder einen Stanzprozess gefertigt sind und daher als zweidimensionale, sich in lateraler Richtung erstreckende Lagen ausgestaltet sind, deren Lagenhöhe geringer ist als ihre laterale Erstreckung.

3. Ventil nach Anspruch 1 oder 2, **dadurch gekennzeichnet, dass** die Scheiben und/ oder Ringe durch Punktschweißen und/ oder Verschrauben miteinander verbunden sind, so dass eine Scheibe oder ein Ring den Boden (7) des Grundkörpers (1) bildet und eine Scheibe oder ein Ring den Deckel (8) des Grundkörpers (1) ausbildet, wobei alle weiteren Komponenten des Ventils zwischen dem Boden (7) und dem Deckel (8) angeordnet sind.

4. Ventil nach einem der voranstehenden Ansprüche, **dadurch gekennzeichnet, dass** ein Teil der Scheiben und/ oder Ringe (9a, 9b) zu einem Unterverbund (20) des Verbunds vormontiert zusammengefasst sind.

5. Ventil nach einem der voranstehenden Ansprüche, **dadurch gekennzeichnet, dass** eine Scheibe als geschlossener Deckel (8) ohne mittigen Durchgang ausgestaltet ist, und/ oder dass eine Scheibe oder ein Ring den Boden (7) des Grundkörpers (1) ausbildet, wobei im Boden (7) der Einlass (3) und/ oder mindestens ein Wasserablaufschlitz (27) ausgebildet ist.

6. Ventil nach einem der voranstehenden Ansprüche, **gekennzeichnet durch** eine feuerfeste Ausgestaltung und/ oder **dadurch, dass** zumindest ein Teil der Scheiben und/ oder Ringe (9a, 9b) aus Metall gefertigt ist und/ oder metallisch dichtend aneinander liegt.

7. Ventil nach einem der voranstehenden Ansprüche, **dadurch gekennzeichnet, dass** der Auslass (4) des Durchgangs (2) zwischen zwei Scheiben und/ oder Ringen (9a-d) angeordnet ist, so dass ein Fluid in lateraler Richtung oder radialer Richtung entweichen kann.

8. Ventil nach einem der voranstehenden Ansprüche, **dadurch gekennzeichnet, dass** der Auslass (4) des Durchgangs durch mehr als zwei Scheiben und/ oder Ringe (9a-d) gebildet ist.

9. Ventil nach einem der voranstehenden Ansprüche, **dadurch gekennzeichnet, dass** zwischen dem Einlass (3) und dem Auslass (4) eine lösbare Platte (11) aus einem fluidundurchlässigen Material angeordnet ist.

10. Ventil nach Anspruch 9, **dadurch gekennzeichnet, dass** die Platte (11) eine Aussparung (12) aufweist, die durch eine fluiddurchlässige Membran (13) verschlossen ist.

11. Ventil nach Anspruch 9 oder 10, **dadurch gekennzeichnet, dass** die lösbare Platte (11) durch umbiegbare oder entfernbare Stege (14) mittelbar oder unmittelbar gegen eine Scheibe oder einen Ring gedrückt ist.

12. Ventil nach einem der Ansprüche 9 bis 11, **dadurch gekennzeichnet, dass** die lösbare Platte (11) durch umbiegbare oder entfernbare Stege (14) gegen eine Dichtung (15) gedrückt ist, die an ein Gehäuse (21) anlegbar ist.

13. Ventil nach Anspruch 12, **dadurch gekennzeichnet, dass** die Stege (14) an einer Scheibe oder einem Ring angeordnet sind, der einen Zentraldurchgang (16) aufweist, wobei die Stege (14) radial in den Zentraldurchgang (16) einragen.

14. Ventil nach einem der voranstehenden Ansprüche, **dadurch gekennzeichnet, dass** im Grundkörper (1) mindestens eine Durchgriffsöffnung (17) für eine Schraube und/ oder einen Bolzen oder Schraubbolzen (22) vorgesehen ist, die sich durch den ganzen Grundkörper (1) erstreckt.

15. Anordnung, umfassend ein Ventil nach einem der voranstehenden Ansprüche und ein Gehäuse (21), an welchem das Ventil angeordnet ist, und/ oder einen Adapter (25), welcher mit dem Ventil verbunden ist, wobei der Adapter (25) ein Leitungs- oder Rohrstück aufweist.
